# EUROPÄISCHE PATENTSCHRIFT

(11) **EP 1 682 367 B1**
(45) Veröffentlichungstag und Bekanntmachung des Hinweises auf die Patenterteilung: **25.10.2017**
(21) Anmeldenummer: 04797657.6
(22) Anmeldetag: 05.11.2004
(51) Int. Cl.: B60H 1/00, F16K 11/052

(54) **TROMMELKLAPPE**
DRUM-TYPE VALVE
CLAPET DU TYPE PAPILLON

(30) Priorität: 07.11.2003 DE 10352533
(43) Veröffentlichungstag der Anmeldung: 26.07.2006
(73) Patentinhaber: MAHLE Behr GmbH & Co. KG, 70469 Stuttgart (DE)
(72) Erfinder: KOMOWSKI, Michael, 71263 Weil der Stadt (DE)
(74) Vertreter: Grauel, Andreas
(86) Internationale Anmeldenummer: PCT/EP2004/012550
(87) Internationale Veröffentlichungsnummer: WO 2005/044605

(56) Entgegenhaltungen:
- EP-A2- 1 306 240
- DE-A1- 10 053 814
- DE-A1- 19 915 966
- JP-A- 2003 136 938
- JP-A- 2003 237 345
- JP-A- 2005 081 975
- US-A1- 2002 016 147

## Beschreibung

Die Erfindung betrifft eine Trommelklappe, insbesondere zur Luftverteilung bei einem Kraftfahrzeug-Belüftungssystem, gemäß dem Oberbegriff des Anspruchs 1.

Bekannt sind Trommelklappen, die zur Erhöhung der Stabilität und zur Abdichtung einen außen umlaufenden Rand aufweisen. Derartige Trommelklappen lassen noch Wünsche in Hinblick auf die Dichtheit offen.

Eine Luftklappe mit einem umlaufenden Rand ist auch aus der DE 100 53 814 A1 bekannt, wobei jedoch diese Luftklappe von der Zylinderform abweicht.

Aus der DE 198 19 280 A1 ist eine Luftverteilungsvorrichtung mit Trommelklappe bekannt, die ein Gehäuse mit einer zylindrischen Wand, die mindestens zwei Luftdurchlassöffnungen aufweist, eine Klappe, die schwenkbar im Verhältnis zu einer Drehachse gelagert ist und eine allgemein zylindrische Verschlusswand umfasst, die im Verhältnis zu einem Klappenkörper, der aus zwei Seitenteilen besteht, beweglich in einer zur Drehachse der Klappe in etwa radialen Richtung gelagert ist, was anhand von Verstellmitteln erfolgt, die mit der Drehung der Klappe synchronisiert sind, wodurch die Verschlusswand von der Wand entfernt werden kann, wenn sich die Klappe in einer Öffnungsposition befindet, und wodurch die Verschlusswand an die Wand des Gehäuses angenähert werden kann, wenn sich die besagte Klappe in einer Schließposition befindet. Eine derartige Luftverteilungsvorrichtung hat viele Bauteile und einen komplizierten Aufbau, so dass sie in der Herstellung zu teuer ist.

Es ist Aufgabe der Erfindung, eine verbesserte Trommelklappe zur Verfügung zu stellen.

Diese Aufgabe wird gelöst durch eine Trommelklappe mit den Merkmalen des Anspruchs 1. Vorteilhafte Ausgestaltungen sind Gegenstand der Unteransprüche.

Erfindungsgemäß ist eine Trommelklappe mit einer gewölbten Fläche, die einen ersten Bereich und zwei Kreissegmentflächen, die je einen zweiten Bereich bilden, und mit einem außen umlaufenden, im Wesentlichen in zwei Ebenen, in der auch die Schwenkachse liegt, angeordenten, nach außen vorstehenden und der Anlage an entsprechend ausgebildeten Anlageflächen dienenden Rand vorgesehen, die mindestens einen zweiten Rand aufweist, Dieser zweite Rand dient insbesondere der besseren Abdichtung, so dass mit einer Trommelklappe mehrere, beispielsweise vier, Luftkanäle gesteuert werden können und bei Anlage der Ränder an entsprechenden Anschlägen keine unerwünschte Querströmung der Luft erfolgt. Die gewölbte Fläche ist beispielsweise als Teil-Zylinderfläche oder als Teil-Kugelfläche ausgeführt.

Gemäß einer ersten Ausführungsform ist der zweite Rand im ersten und vorzugsweise auch im zweiten Bereich der Trommelklappe vorgesehen. Dabei ist der zweite Rand bevorzugt in einer Ebene, in der auch die Schwenkachse liegt, angeordnet und steht nach außen vor, wobei die Ebene, in der der zweite Rand liegt, in einem Winkel zwischen den beiden anderen Ebenen, in denen der erste Rand liegt, angeordnet ist. Hierbei ist mindestens eine Öffnung in mindestens einem Segment des ersten und/oder des zweiten Bereichs vorgesehen, wobei das entsprechende Segment von dem ersten und dem zweiten Rand begrenzt ist, so dass eine Querströmung von Luft sicher verhindert werden kann. Um eine Querströmung der Luft im Bereich der Schwenkachse zu verhindern und die Stabilität der Trommelklappe zu erhöhen, ist bevorzugt im Bereich der Schwenkachse ein kreisförmiger Bereich vorgesehen, welcher in seiner Dicke entsprechend den Rändern ausgebildet ist.

Gemäß einer zweiten Ausführungsform verläuft der zweite Rand im Wesentlichen um einen dritten Bereich, der an die Mantelfläche im Bereich des ersten Randes durch einen Zwischenbereich getrennt indirekt anschließt. Dieser dritte Bereich ist vorzugsweise etwa rechteckförmig ausgebildet, kann jedoch gegebenenfalls auch eine andere Form aufweisen, die von einem zweiten Rand umgeben ist, welcher insbesondere der Abdichtung dient, so dass eine Querströmung verhindert werden kann.

Bevorzugt sind die Ebenen in denen der dritte Bereich und der Zwischenbereich liegen in einem Winkel von ungleich 180° zueinander angeordnet. Dabei wird bevorzugt ein Winkel von weniger als 180° bis 120°verwendet.

Die Trommelklappe wird bevorzugt als Luftverteilerklappe und/oder als Temperatur-Mischklappe in einer Kraftfahrzeug-Klimaanlage verwendet, wobei die Trommelklappe gemäß der ersten Ausführungsform bevorzugt als Luftverteilerklappe und die Trommelklappe gemäß der zweiten Ausführungsform bevorzugt als Temperatur-Mischklappe dient.

Im Folgenden wird die Erfindung anhand von vier Ausführungsbeispielen unter Bezugnahme auf die Zeichnung im Einzelnen erläutert. In der Zeichnung zeigen:

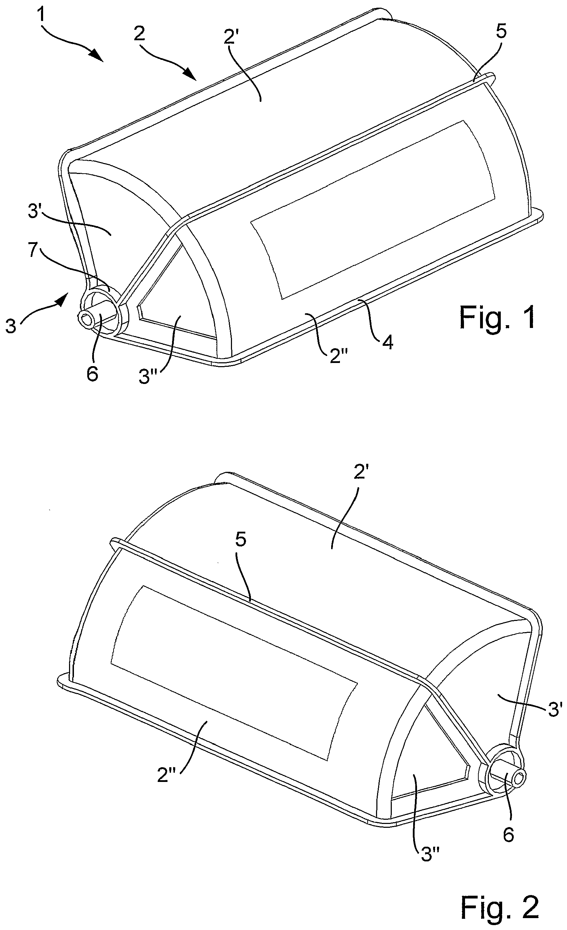

- Fig. 1: eine perspektivische Ansicht einer Trommelklappe gemäß dem ersten Ausführungsbeispiel,
- Fig. 2: die Trommelklappe von Fig. 1 aus einer anderen Perspektive,
- Fig. 3: eine Seitenansicht der Trommelklappe von Fig. 1 zur Verdeutlichung deren Funktion in einer ersten Stellung,
- Fig. 4: eine Seitenansicht der Trommelklappe von Fig. 1 in einer zweiten Stellung,
- Fig. 5: eine perspektivische Ansicht einer Trommelklappe gemäß dem zweiten Ausführungsbeispiel,
- Fig. 6: eine perspektivische Ansicht einer Trommelklappe gemäß dem dritten nicht erfindungsgemäßen Ausführungsbeispiel
- Fig. 7: die Trommelklappe von Fig. 6 aus einer anderen Perspektive,
- Fig. 8: eine Detailansicht des Bereichs E von Fig. 7,
- Fig. 9: die Trommelklappe von Fig, 6 aus einer anderen Perspektive,
- Fig. 10: eine Detailansicht des Bereichs D von Fig. 9,
- Fig. 11: eine Seitenansicht der Trommelklappe von Fig. 6 mit zwei Detailansichten,
- Fig. 12a-c: drei Ansichten einer Kraftfahrzeug-Klimaanlage mit der Trommelklappe von Fig. 6 in verschiedenen Stellungen,
- Fig. 13: eine perspektivische Ansicht einer zweiten Kraftfahrzeug-Klimaanlage mit zwei Trommelklappen,
- Fig. 14: die Klimaanlage von Fig. 13 aus einer anderen Perspektive,
- Fig. 15a-f: Seitenansichten der Klimaanlage von Fig. 13 mit verschiedenen Klappenstellungen, und
- Fig. 16: die in der Klimaanlage von Fig. 13 verwendete Trommelklappe gemäß dem vierten Ausführungsbeispiel in einer perspektivischen Darstellung.

Eine Trommelklappe 1, wie sie insbesondere in einer Kraftfahrzeug-Klimaanlage verwendet wird, weist einen ersten Bereich 2, der durch einen Teilbereich eines Zylinders gebildet wird, und zwei zweite Bereiche 3 auf, die durch die Kreissegmente der Seitenflächen des entsprechenden Zylinders gebildet werden. Dabei ist der Übergangsbereich abgerundet ausgebildet. Wie bei herkömmlichen Trommelklappen verläuft ein Rand 4 senkrecht nach außen abstehend um die Kante des ersten und der zweiten Bereiche 2 bzw. 3. Dieser Rand 4 bildet eine Anlagefläche, welcher in Zusammenwirken mit einer zugehörigen, am Luftführungsgehäuse der Klimaanlage ausgebildeten zweiten Anlagefläche zugleich auch eine abdichtende Funktion hat.

Neben dem ersten Rand 4 ist ein zweiter Rand 5 vorgesehen, der entsprechend dem ersten Rand 4 in einer Ebene verläuft, in der auch die Schwenkachse der Trommelklappe 1 liegt. Dabei teilt der zweite Rand 5 den ersten und die zweiten Bereiche 2 bzw. 3 in je zwei Segmente 2' und 2" bzw. 3' und 3". Gemäß dem ersten Ausführungsbeispiel ist in den Segmenten 3" des zweiten Bereichs 3 je eine Öffnung (Seitenöffnung) vorgesehen, wohingegen die Segmente 2', 2" und 3' ohne Öffnung(en) ausgebildet sind.

Zur Lagerung der Trommelklappe 1 sind in der Schwenkachse zwei Lagerzapfen 6 vorgesehen, die im eingebauten Zustand in Lagern gelagert sind. Um die Lagerzapfen 6 ist ein kreisförmiger Bereich 7 vorgesehen, welcher Teil des ersten und des zweiten Randes 4 und 5 ist und auch eine abdichtende Funktion aufweist.

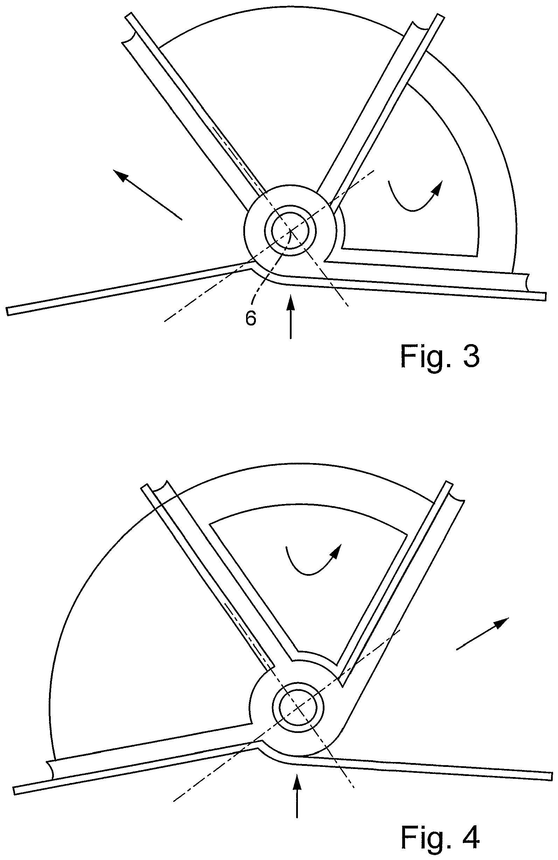

In den Figuren 3 und 4 sind zwei Stellungen der in eine Klimaanlage eingebauten Trommelklappe 1 dargestellt, welche als Luftverteilerklappe verwendet wird und der Steuerung der Luftverteilung auf drei Luftkanäle, nämlich den Defrost-Luftkanal, in den Figuren 3 und 4 mit "Defrost" bezeichnet, den Fußraum-Luftkanal, in den Figuren 3 und 4 mit "Fussraum" bezeichnet, und den Belüftungs-Luftkanal, in den Figuren 3 und 4 mit "Belueftung" bezeichnet. Die Luftströmung ist durch Pfeile dargestellt.

Fig. 3 zeigt eine Klappenstellung, bei der viel Luft der Windschutzscheibe zum Entfrosten zugeführt und über die Seitenöffnung etwas Luft dem Fahrzeug-Innenraum zugeführt wird. Der Fußraum-Luftkanal ist verschlossen.

In der Klappenstellung von Fig. 4 ist der Defrost-Luftkanal verschlossen, in Fußraum-Luftkanal gelangt über die Seitenöffnung etwas Luft und der Belüftungs-Luftkanal ist vollständig geöffnet.

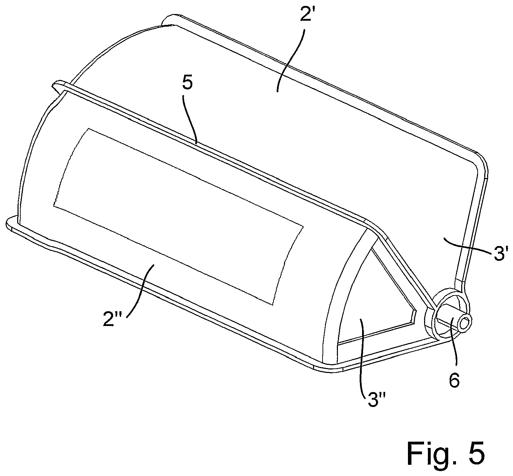

Gemäß einem zweiten Ausführungsbeispiel, das in Fig. 5 dargestellt ist, ist auch im Segment 2" eine Öffnung (Frontöffnung) vorgesehen. Andere Anordnungen von Öffnungen, beispielsweise eine versetzte Anordnung von Seiten- und Frontöffnungen in einzelnen Segmenten, sind möglich. Auch gemäß diesem Ausführungsbeispiel sind zwei Ränder 4 und 5 vorgesehen, welche der Abdichtung dienen.

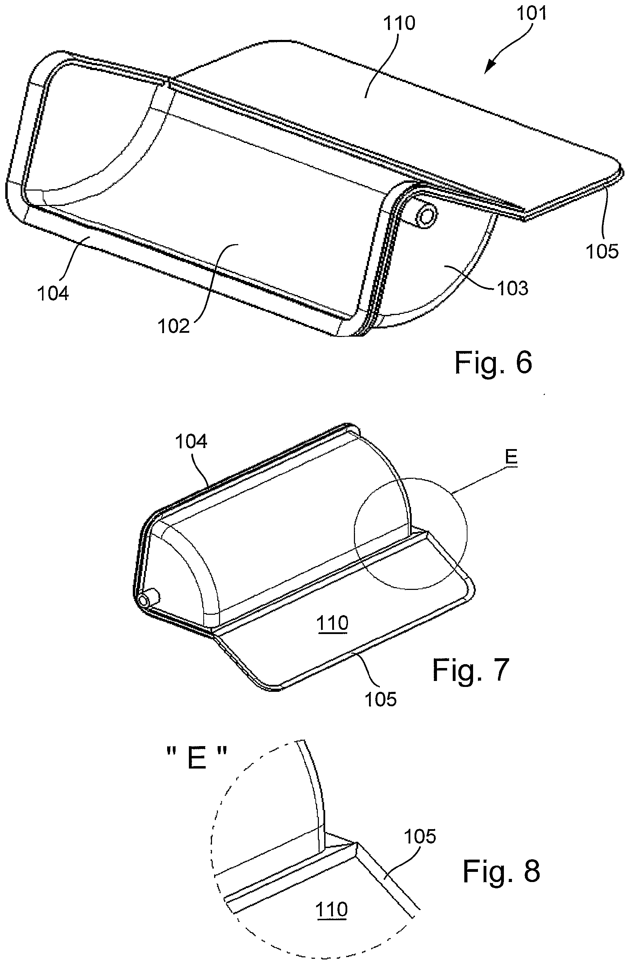

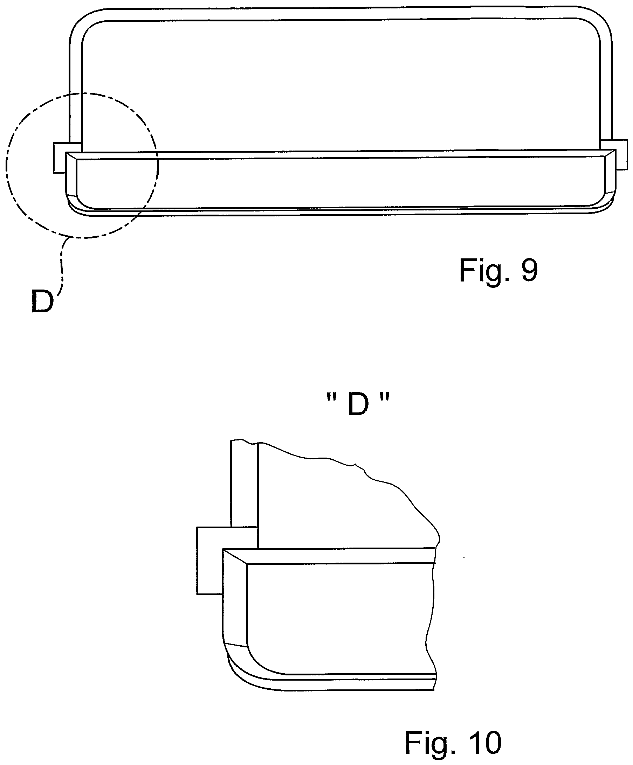

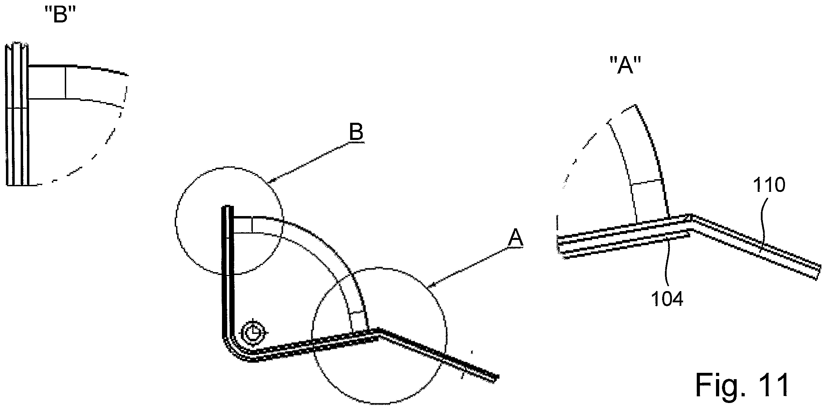

Eine Trommelklappe 101 gemäß dem dritten Ausführungsbeispiel ist in den Figuren 6 bis 11 dargestellt. Hierbei weist die Trommelklappe 101 einen ersten Bereich 102, der durch einen Teilbereich eines Zylinders gebildet wird, und zwei zweite Bereiche 103 auf, die durch die Kreissegmente der Seitenflächen des entsprechenden Zylinders gebildet werden. Dabei ist der Übergangsbereich abgerundet ausgebildet. Wie bei herkömmlichen Trommelklappen verläuft ein Rand 104 senkrecht nach außen abstehend um die Kante des ersten und der zweiten Bereiche 102 bzw. 103. Dieser Rand 104 bildet eine Anlagefläche, welche entsprechend dem Rand 4 des ersten und zweiten Ausführungsbeispiels in Zusammenwirken mit einer zugehörigen, am Luftführungsgehäuse der Klimaanlage ausgebildeten zweiten Anlagefläche zugleich auch eine abdichtende Funktion hat.

Wie insbesondere aus Fig. 8 ersichtlich, grenzt an den ersten Bereich 102 ein dritter, rechteckförmig ausgebildeter Bereich 110 an, der auf einer Seite vom entsprechenden Rand 104 und auf den drei anderen Seiten von einem zweiten Rand 105 begrenzt ist. Dabei ist der Übergang zwischen den Rändern 104 und 105 abdichtend ausgebildet, so dass im Prinzip die beiden Bereiche 102 und 110 jeweils vollständig von einem abgrenzenden Rand umgeben und somit unabhängig voneinander abgedichtet sind, wenn der entsprechende Rand in Anlage an einer Anlagefläche ist.

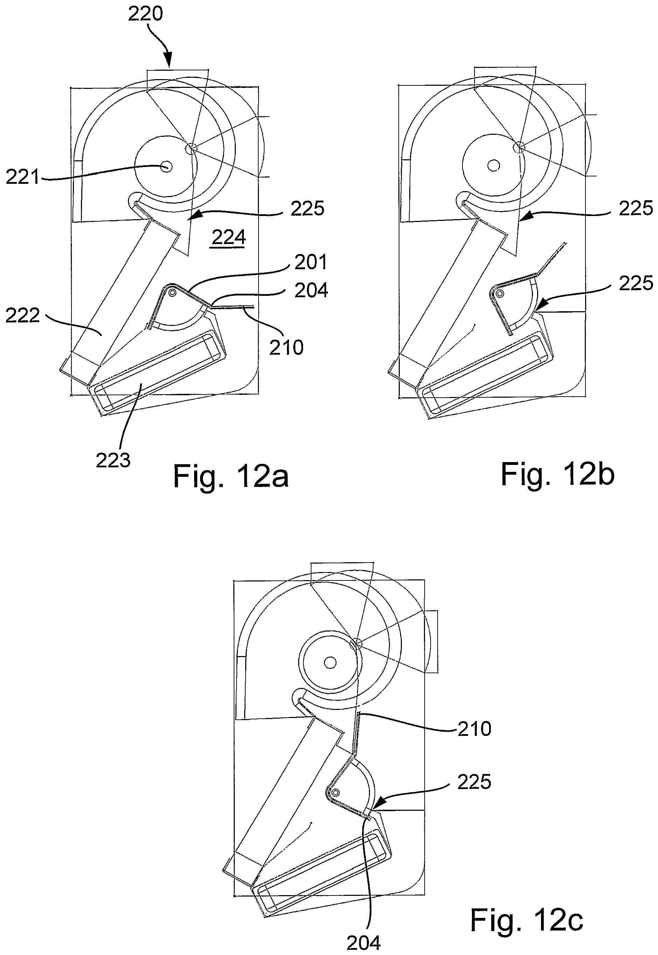

In Figuren 12a bis 12c ist eine Kraftfahrzeug-Klimaanlage 220 mit einem Gebläse 221, einem Verdampfer 222, einem Heizkörper 223, einer Trommelklappe 201, welche der Trommelklappe des dritten Ausführungsbeispiels entspricht, und einem Mischraum 224 dargestellt. Hierbei versperrt die Trommelklappe 201 in Fig. 12a den Luftdurchtritt durch den Heizkörper 223, so dass die dem Fahrzeuginnenraum zugeleitete Luft maximal gekühlt wird.

In Fig. 12b ist eine Zwischenstellung der Trommelklappe 201 dargestellt und in Fig. 12c eine Stellung, in der die gesamte Luft durch den Heizkörper 223 geleitet und somit maximal erwärmt wird. Wie aus den Figuren 12a bis 12c ersichtlich ist, liegt die Trommelklappe 201 in den Endstellungen an Anschlägen 225 an, welche am Luftführungsgehäuse der Klimaanlage 220 ausgebildet sind. Dabei sorgen die Ränder 205 und 210 dafür, dass keine Luft in der geschlossenen Stellung in den Mischraum 224 gelangt.

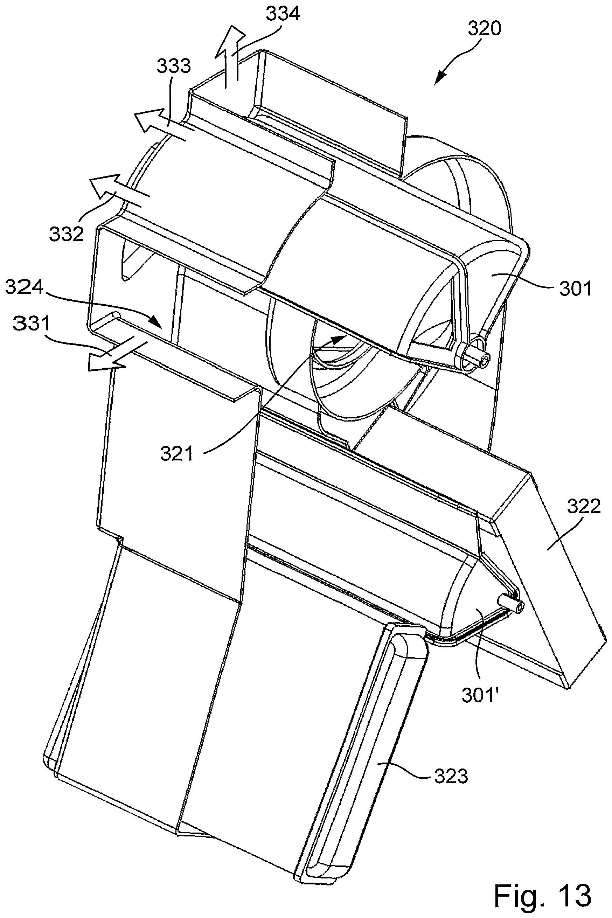

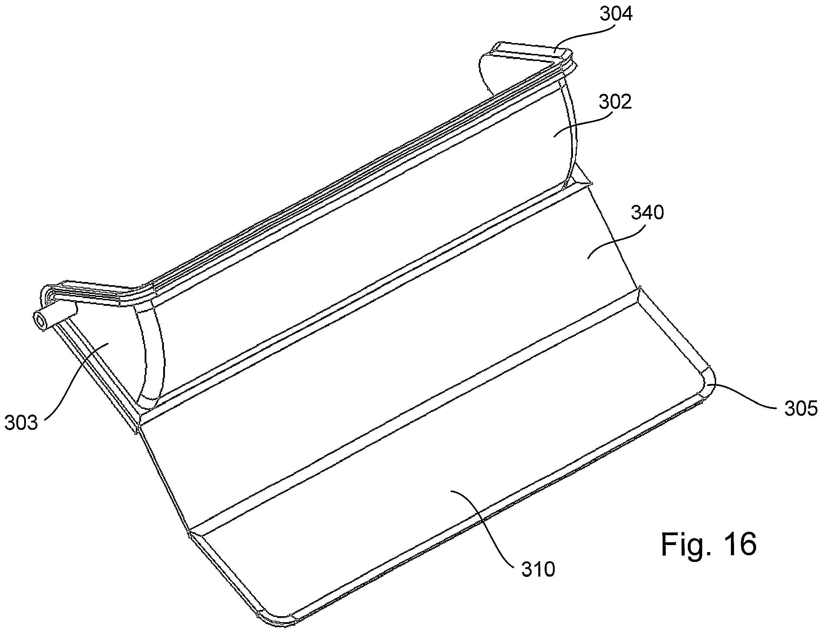

Die Figuren 13 bis 15f zeigen eine zweite Kraftfahrzeug-Klimaanlage 320, mit einem Gebläse 321, einem Verdampfer 322, einem Heizkörper 323, einer als Verteilerklappe dienenden ersten Trommelklappe 301, welche der Trommelklappe des ersten Ausführungsbeispiels entspricht, sowie einer als Temperatur-Mischklappe dienenden, zweiten Trommelklappe 301', welche in Fig. 16 näher dargestellt und an späterer Stelle näher beschrieben ist, und einem Mischraum 224 dargestellt.

Die erste Trommelklappe 301 dient der Luftverteilung auf eine Mehrzahl von Luftkanälen, nämlich den Luftkanal 331, welcher zur Mitteldüse führt, den Luftkanal 332, welcher zur Seitendüse führt, den Luftkanal 333, welcher zum Fußraum führt, und den Luftkanal 334, welcher der Entfrostung der Windschutzscheibe dient.

Die zweite Trommelklappe 301', die in Luftströmungsrichtung gesehen vor der ersten Trommelklappe 301 angeordnet ist, weist einen ersten Bereich 302, der durch einen Teilbereich eines Zylinders gebildet wird, und zwei zweite Bereiche 303 auf, die durch die Kreissegmente der Seitenflächen des entsprechenden Zylinders gebildet werden. Dabei ist der Übergangsbereich abgerundet ausgebildet. Wie bei den zuvor beschriebenen Trommelklappen 1 und 101 verläuft ein Rand 304 senkrecht nach außen abstehend um die Kante des ersten und der zweiten Bereiche 302 bzw. 303. Dieser Rand 304 bildet eine Anlagefläche, welche entsprechend den Rändern der zuvor beschriebenen Ausführungsbeispiele in Zusammenwirken mit einer zugehörigen, am Luftführungsgehäuse der Klimaanlage ausgebildeten zweiten Anlagefläche zugleich auch eine abdichtende Funktion hat.

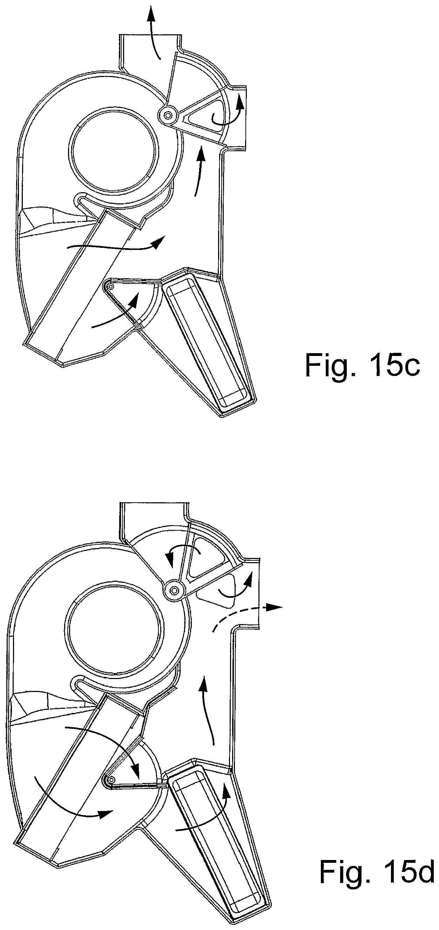

Wie aus Fig. 16 ersichtlich, grenzt an den ersten Bereich 302 ein Zwischenbereich 340 und hieran anschließend ein dritter, rechteckförmig ausgebildeter Bereich 310 an. Hierbei ist der dritte Bereich 310 auf allen vier Seiten von einem zweiten Rand 305 begrenzt. Der Zwischenbereich 340 und der dritte Bereich 310 sind vorliegend in einem Winkel von ca. 140° zueinander angeordnet, damit eine vollständige Abdichtung des Strömungsweges der Luft durch den Heizkörper 323 vermieden werden kann (siehe z.B. Fig. 15c), da die Ränder 304 und 305 dicht an durch das Luftführungsgehäuse gebildete Anlageflächen anliegen. Die Breite des Zwischenbereichs 340 entspricht etwa der Dicke des Heizkörpers 323.

Gemäß dem vorliegenden Ausführungsbeispiel sind der Zwischenbereich 340 und der dritte Bereich 310 in einem Winkel ungleich 180° zueinander angeordnet, jedoch können die Beiden auch in einer Ebene angeordnet sein.

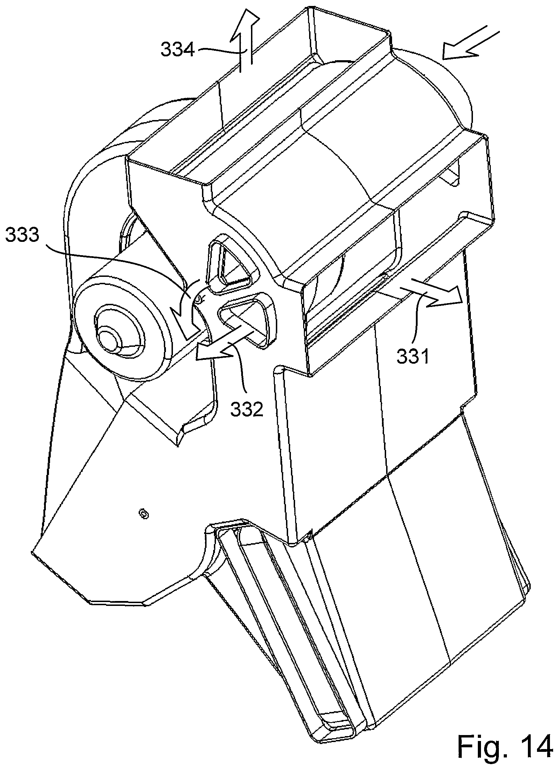

Vom Gebläse 321 wird Frisch- oder Umluft angesaugt, wie in Fig. 14 durch eine Pfeil rechts oben dargestellt ist. Diese Luft wird durch den Verdampfer 322 geleitet und je nach Stellung der zweiten Trommelklappe 301' am Heizkörper 323 vorbei und/oder durch diesen geleitet. Im Mischraum 324 erfolgt eine Mischung der Luft, sofern die zweite Trommelklappe 301' den Luftstrom aufteilt. Anschließend wird die Luft je nach Stellung der ersten Trommelklappe 301 auf die Luftkanäle 331, 332, 333 und 334 verteilt und dem Fahrzeuginnenraum zugeführt.

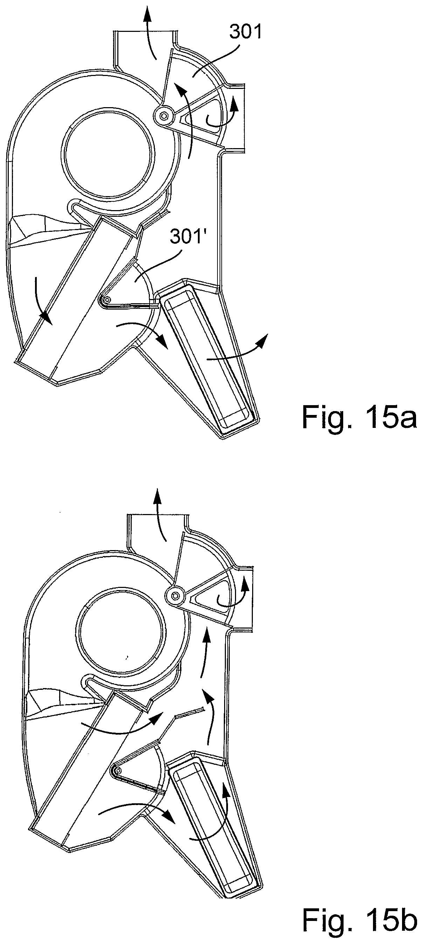

Verschiedene Stellungen der beiden Trommelklappen 301 und 301' sind in den Figuren 15a bis 15f dargestellt. Hierbei zeigt Fig. 15a die Stellung "maximales Heizen" der zweiten Trommelklappe 301', wobei die warme Luft der Windschutzscheibe zwecks Entfrosten derselben und der Seitendüse zugeführt wird, d.h. die Luftkanäle 332 und 334 sind freigegeben, während die Luftkanäle 331 und 333 dicht verschlossen sind.

Fig. 15b zeigt eine Mischstellung der zweiten Trommelklappe 301', so dass die warme und kalte Luft im Mischraum 324 gemischt wird. Die Stellung der ersten Trommelklappe 301 entspricht der von Fig. 15a, so dass die entsprechend der Öffnung der zweiten Trommelklappe 301' temperierte Luft der Windschutzscheibe zwecks Entfrosten derselben und der Seitendüse zugeführt wird. Gemäß Fig. 15c wird der Windschutzscheibe zwecks Entfrosten derselben und der Seitendüse kalte Luft zugeführt, da die zweite Trommelklappe 301' auf Grund ihrer Ausgestaltung den Weg durch den Heizkörper 323 dicht absperrt, und zwar von vorne als auch von hinten.

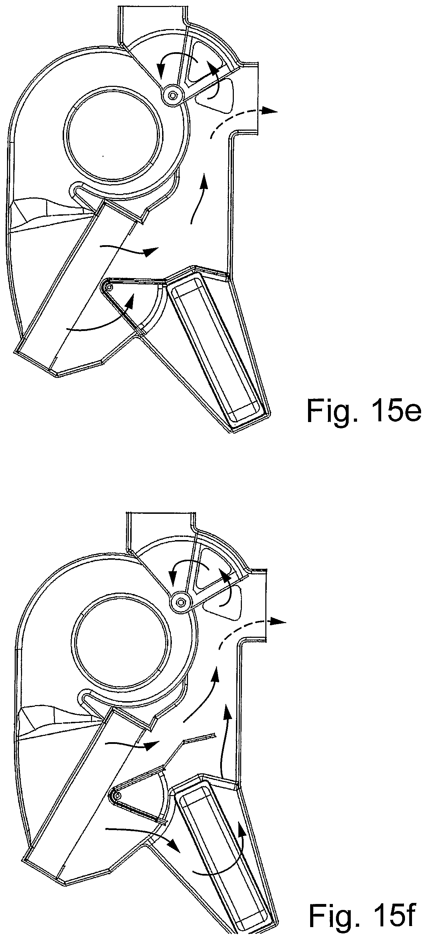

Fig. 15d zeigt wiederum die Stellung "maximales Heizen" der zweiten Trommelklappe 301' (vgl. Fig. 15a), jedoch ist die erste Trommelklappe 301 derart geschwenkt, dass die Luft dem Fahrzeuginnenraum über die Luftkanäle 331, 332 und 333 zugeführt wird, während der Luftkanal 334 verschlossen ist. Die Feineinstellung der Luftverteilung zwischen diesen drei Luftkanälen kann über die entsprechenden Düsen vor Ort erfolgen. Fig. 15e zeigt eine entsprechende Luftverteilung maximal gekühlter Luft und Fig. 15f die entsprechende Luftverteilung von temperierter Luft.

Auf Grund ihrer entsprechend ausgebildeten Ränder ist bei den Trommelklappen aller Ausführungsbeispiele eine gute Abdichtung zwischen der Trommelklappe und den entsprechenden Anlageflächen möglich, so dass eine optimierte Temperierung der Luft möglich ist.

### Bezugszeichenliste

1, 101, 201, 301, 301' Trommelklappe
2, 102, 302 erster Bereich
2', 2" Segment
3, 103, 303 zweiter Bereich
3', 3" Segment
4, 104, 304 erster Rand
5, 105, 305 zweiter Rand
6 Lagerzapfen
7 kreisförmiger Bereich
110, 310 dritter Bereich
220, 320 Klimaanlage
221, 321 Gebläse
222, 322 Verdampfer
223, 323 Heizkörper
224, 324 Mischraum
225 Anlagefläche
331, 332, 333, 334 Luftkanal
340 Zwischenbereich

## Patentansprüche

1. Trommelklappe (1; 301; 301') mit einer Teil-Zylinderfläche, die einen ersten Bereich (2; 302) bildet, mit zwei Kreissegmentflächen, die je einen zweiten Bereich (3; 303) bilden, und mit einem außen umlaufenden, im Wesentlichen in zwei Ebenen angeordneten, nach außen vorstehenden und der Anlage an entsprechend ausgebildeten Anlageflächen dienenden Rand (4; 304), wobei die Trommelklappe (1; 301; 301') mindestens einen zweiten Rand (5; 305) aufweist, **dadurch gekennzeichnet, dass** die Trommelklappe (1) mindestens eine Öffnung in mindestens einem Segment (2", 3") des ersten und/oder des zweiten Bereichs (2 bzw. 3) aufweist, wobei das Segment (2", 3") von dem ersten und dem zweiten Rand (4, 5) begrenzt ist.

2. Trommelklappe nach Anspruch 1, **dadurch gekennzeichnet, dass** der zweite Rand (5) im ersten Bereich (2) der Trommelklappe (1) vorgesehen ist.

3. Trommelklappe nach Anspruch 1 oder 2, **dadurch gekennzeichnet, dass** der zweite Rand (5) im zweiten Bereich (3) vorgesehen ist.

4. Trommelklappe nach einem der Ansprüche 1 bis 3, **dadurch gekennzeichnet, dass** der zweite Rand (5; 305) in einer Ebene, in der auch die Schwenkachse liegt, angeordnet ist und nach außen vorsteht, wobei die Ebene, in der der zweite Rand (105; 305) liegt, in einem Winkel zwischen den beiden anderen Ebenen, in denen der erste Rand (104; 304) liegt, angeordnet ist.

5. Trommelklappe nach einem der Ansprüche 1 bis 4, **dadurch gekennzeichnet, dass** im Bereich der Schwenkachse ein kreisförmiger Bereich (7) vorgesehen ist, welcher in seiner Dicke entsprechend den Rändern (4, 5) ausgebildet ist.

6. Trommelklappe (301') mit einer Teil-Zylinderfläche, die einen ersten Bereich (302) bildet, mit zwei Kreissegmentflächen, die je einen zweiten Bereich (303) bilden, und mit einem außen umlaufenden, im Wesentlichen in zwei Ebenen angeordneten, nach außen vorstehenden und der Anlage an entsprechend ausgebildeten Anlageflächen dienenden Rand (304), wobei die Trommelklappe (301') mindestens einen zweiten Rand (305) aufweist, **dadurch gekennzeichnet, dass** der zweite Rand (305) im Wesentlichen um einem dritten Bereich (310) verläuft, der an die Mantelfläche im Bereich des ersten Randes (304) durch einen Zwischenbereich (340) getrennt - indirekt anschließt.

7. Trommelklappe nach Anspruch 6, **dadurch gekennzeichnet, dass** der dritte Bereich (310) etwa rechteckförmig ausgebildet ist.

8. Trommelklappe nach Anspruch 6 oder 7, **dadurch gekennzeichnet, dass** die Ebenen, in denen der dritte Bereich (310) und der Zwischenbereich (340) liegen, in einem Winkel von ungleich 180° zueinander angeordnet sind.

9. Trommelklappe nach einem der vorhergehenden Ansprüche, **dadurch gekennzeichnet, dass** in der Schwenkachse zwei nach außen überstehende Lagerzapfen (6) vorgesehen sind.

10. Klimaanlage mit einem Luftführungsgehäuse **gekennzeichnet durch** eine im Luftführungsgehäuse angeordnete Trommelklappe (1; 301; 301') nach einem der Ansprüche 1 bis 9.

11. Klimaanlage nach Anspruch 10, **dadurch gekennzeichnet, dass** die Trommelklappe (1; 301; 301') als Luftverteilerklappe und/oder als Temperatur-Mischklappe dient.

## Claims

1. A drum flap (1; 301; 301') having a part-cylinder surface, which forms a first region (2; 302), with two circle segment surfaces, which each form a second region (3; 303), and having an externally surrounding rim (4; 304), which is arranged substantially in two planes, projects outward and serves to bear against correspondingly designed bearing surfaces, wherein the drum flap (1; 301; 301') has at least one second rim (5; 305), **characterised in that** the drum flap (1) has at least one opening in at least one segment (2", 3") of the first and/or second region (2 or 3), wherein the segment (2", 3") is delimited by the first and the second rim (4, 5).

2. The drum flap as claimed in claim 1, **characterised in that** the second rim (5) is provided in the first region (2) of the drum flap (1).

3. The drum flap as claimed in claim 1 or 2, **characterised in that** the second rim (5) is provided in the second region (3).

4. The drum flap as claimed in one of claims 1 to 3, **characterised in that** the second rim (5; 305) is arranged in a plane in which the pivot axis also lies, and projects outward, wherein the plane in which the second rim (105; 305) lies is arranged in an angle between the other two planes in which the first rim (104; 304) lies.

5. The drum flap as claimed in one of claims 1 to 4, **characterised in that** a circular region (7), the thickness of which is designed to match the rims (4, 5), is provided in the region of the pivot axis.

6. A drum flap (301') having a part-cylinder surface, which forms a first region (302), with two circle segment surfaces, which each form a second region (303), and having an externally surrounding rim (304), which is arranged substantially in two planes, projects outward and serves to bear against correspondingly designed bearing surfaces, wherein the drum flap (301') has at least one second rim (305), **characterised in that** the second rim (305) runs substantially around a third region (310), which - separated by an intermediate region (340) - indirectly adjoins the lateral surface in the region of the first rim (304).

7. The drum flap as claimed in claim 6, **characterised in that** the third region (310) is approximately rectangular in form.

8. The drum flap as claimed in claim 6 or 7, **characterised in that** the planes in which the third region (310) and the intermediate region (340) lie are arranged at an angle not equal to 180° with respect to one another.

9. The drum flap as claimed in one of the preceding claims, **characterised in that** two outwardly protruding bearing journals (6) are provided on the pivot axis.

10. An air-conditioning system having an air guidance housing, **characterised by** a drum flap (1; 301; 301') as claimed in one of claims 1 to 9 arranged in the air guidance housing.

11. The air-conditioning system as claimed in claim 10, **characterised in that** the drum flap (1; 301; 301') serves as an air distributor flap and/or as a temperature mixing flap.

## Revendications

1. Volet à tambour (1 ; 301 ; 301') comprenant une surface cylindrique partielle qui forme une première zone (2 ; 302) et comprend deux surfaces de segment de cercle qui forment chacune une deuxième zone (3 ; 303), et comprenant un bord circulaire (4 ; 304) placé extérieurement, disposé pratiquement dans deux plans, configuré en étant en saillie vers l'extérieur et servant d'appui sur des surfaces d'appui configurées en conséquence, où le volet à tambour (1 ; 301 ; 301') présente au moins un deuxième bord (5 ; 305), **caractérisé en ce que** le volet à tambour (1) présente au moins une ouverture dans au moins un segment (2", 3") de la première et / ou de la deuxième zone (2 ou 3), où le segment (2", 3") est délimité par le premier et par le deuxième bord (4, 5).

2. Volet à tambour selon la revendication 1, **caractérisé en ce que** le deuxième bord (5) est prévu dans la première zone (2) du volet à tambour (1).

3. Volet à tambour selon la revendication 1 ou 2, **caractérisé en ce que** le deuxième bord (5) est prévu dans la deuxième zone (3).

4. Volet à tambour selon l'une quelconque des revendications 1 à 3, **caractérisé en ce que** le deuxième bord (5 ; 305) est disposé dans un plan, dans lequel se trouve également l'axe de pivotement, et est en saillie vers l'extérieur, où le plan, dans lequel se trouve le deuxième bord (105 ; 305), est disposé suivant un angle formé entre les deux autres plans dans lesquels se trouve le premier bord (104 ; 304).

5. Volet à tambour selon l'une quelconque des revendications 1 à 4, **caractérisé en ce qu'**il est prévu, dans la zone de l'axe de pivotement, une zone en forme de cercle (7) qui est configurée, concernant son épaisseur, en correspondant aux bords (4, 5).

6. Volet à tambour (301') comprenant une surface cylindrique partielle qui forme une première zone (302) et comprend deux surfaces de segment de cercle qui forment chacune une deuxième zone (303), et comprenant un bord circulaire (304) placé extérieurement, disposé pratiquement dans deux plans, configuré en étant en saillie vers l'extérieur et servant d'appui sur des surfaces d'appui configurées en conséquence, où le volet à tambour (301') présente au moins un deuxième bord (305), **caractérisé en ce que** le deuxième bord (305) s'étend pratiquement autour d'une troisième zone (310) qui se raccorde indirectement à la surface latérale située dans la zone du premier bord (304), ladite troisième zone étant séparée par une zone intermédiaire (340).

7. Volet à tambour selon la revendication 6, **caractérisé en ce que** la troisième zone (310) est configurée en étant à peu près de forme rectangulaire.

8. Volet à tambour selon la revendication 6 ou 7, **caractérisé en ce que** les plans, dans lesquels se trouvent la troisième zone (310) et la zone intermédiaire (340), sont disposés l'un par rapport à l'autre suivant un angle non égal à 180°.

9. Volet à tambour selon l'une quelconque des revendications précédentes, **caractérisé en ce qu'**il est prévu, dans l'axe de pivotement, deux tourillons (6) faisant saillie vers l'extérieur.

10. Système de climatisation comprenant un carter de guidage d'air, **caractérisé par** un volet à tambour (1 ; 301 ; 301') selon l'une quelconque des revendications 1 à 9, disposé dans le carter de guidage d'air.

11. Système de climatisation selon la revendication 10, **caractérisé en ce que** le volet à tambour (1 ; 301 ; 301') sert de volet répartiteur d'air et / ou de volet mélangeur de température.
